# EUROPEAN PATENT APPLICATION

(11) **EP 1 348 884 A1**
(43) Date of publication of application: **01.10.2003**
(21) Application number: 03251419.2
(22) Date of filing: 08.03.2003
(51) Int. Cl.: F16F 7/12

(54) **Formable energy absorber utilizing a foam stabilized corrugated ribbon**

(30) Priority: 29.03.2002 US 112988
(71) Applicant: HEXCEL CORPORATION, Dublin, California 94568 (US)
(72) Inventor: Thayer, Christopher M., Redding, CA 96001 (US)
(74) Representative: Wilson Gunn M'Caw

(57) **Abstract**

A corrugated ribbon assembly (10) for absorbing energy from an impact. The assembly includes a corrugated ribbon (12) that is embedded in a stabilizing foam (14). The corrugated ribbon (12) has two sides (16, 18) that define an energy absorbing wall (20) which extends between a first impact edge (22) of the ribbon (12) and a second impact edge (24) of the ribbon (12). The wall (20) undergoes buckling to absorb energy when the first (22) or second edge (24) is impacted in a direction that is substantially parallel to the wall (20). The foam (14) provides structural support for the ribbon (12) during buckling thereof.

## Description

### BACKGROUND OF THE INVENTION

### 1. Field of the Invention

The present invention relates generally to structures that are used to absorb impact energy. Such structures are commonly used in automobile headliners, bumper systems and pedestrian impact zones. More particularly, the present invention involves the use of a corrugated ribbon that is foam stabilized to provide an especially effective impact energy absorption system.

### 2. Description of Related Art

Foam is a common energy absorbing material that has been used in virtually all types of situations where absorption of impact energy is required. Foam has been a popular energy absorbing material because it is easy to form into a wide variety of shapes. However, a drawback of foam is that it is not a particularly efficient energy absorbing material.

Honeycomb has also been widely used as and energy absorbing material. The popularity of honeycomb is due to the fact that it is a very efficient energy absorber. However, one drawback of honeycomb is that it is not easily formed into a wide variety of shapes. The high energy absorbing efficiency of honeycomb has made it especially popular material for crash pads in automobile headliners and other types of occupant protection systems. Examples of honeycomb crash pads are described in United States Patent No. 6,158,771.

Although both foam and honeycomb impact absorbing systems have been used successfully, there is a continuing need to develop new energy absorbing structures which combine the high efficiency of honeycomb with the formability of foam.

A number of alternative energy absorbing systems have been developed in which foam is combined with one or more other materials. For example, as described in United States Patent No. 6,082,926, a module is made up of a generally cylindrical metal member which is formed from a roll of sheet metal that is wound into a tube having a spiral cross section. A layer of spacer material, such as polyethylene foam, is placed adjacent the sheet metal so that the winds of the spiral are separated from one another.

### SUMMARY OF THE INVENTION

In accordance with the present invention, an assembly is provided for absorbing energy from an impact. The assembly is a departure from prior systems that utilize honeycomb or foam as the impact absorbing structure. The invention is based on the discovery that corrugated ribbon, when embedded in a foam body, provides a highly efficient energy absorbing assembly that can be easily formed into a wide variety of shapes.

The energy absorbing assembly is composed of at least one corrugated ribbon. The corrugated ribbon includes two sides that define an energy absorbing wall which extends between a first impact edge of the corrugated ribbon and a second impact edge of the corrugated ribbon. The energy absorbing wall is capable of undergoing buckling to absorb energy when the first and/or second impact edge is impacted in a direction substantially parallel to the wall. The assembly further includes a foam body in which the corrugated ribbon is embedded. The foam body provides structural support for the corrugated ribbon during post-impact buckling and energy absorption.

The corrugations provide the ribbon with structural rigidity that is particularly well suited for absorbing energy when the corrugated ribbon is embedded in a supporting foam body. A variety of corrugation types are possible including sinusoidal, rectangular and saw tooth type corrugations. The corrugated ribbon may be embedded in the foam in a spiral configuration or other arrangements where the corrugated ribbon is separated and supported by the foam. The foam provides support for the corrugated ribbon as the ribbon wall undergoes buckling during impact. The foam is chosen so that it does not substantially increase the amount of energy required to buckle the corrugated ribbon.

The energy absorbing assembly of the present invention is particularly well suited for use as a crash pad in automobile and aerospace vehicles where complex shapes and highly efficient energy absorbers are required. The invention also is suitable for use as an alternative to the wide variety of crash pads and energy absorbing systems that utilize honeycomb or foam as the energy absorber.

The above described and many other features and attendant advantages of the present invention will become better understood by reference to the following detailed description when taken in conjunction with the accompanying drawings.

### BRIEF DESCRIPTION OF THE DRAWINGS

FIG. 1 is a perspective view of a preferred exemplary embodiment of the present invention where the corrugated ribbon is in the form of a spiral that is embedded in a foam block.

FIG. 2 is a sectional view of preferred exemplary energy absorber of FIG. 1 taken in the 2-2 plane.

FIG. 3 is a the same sectional view as FIG. 2 except that the energy absorber is shown in a crushed state after having absorbed energy from an impact.

FIG. 4 shows an exemplary corrugated ribbon wherein the corrugations are semi-circular.

FIG. 5 shows an exemplary corrugated ribbon wherein the corrugations are rectangular.

FIG. 6 shows an exemplary corrugated ribbon having a saw tooth corrugation.

### DETAILED DESCRIPTION OF THE INVENTION

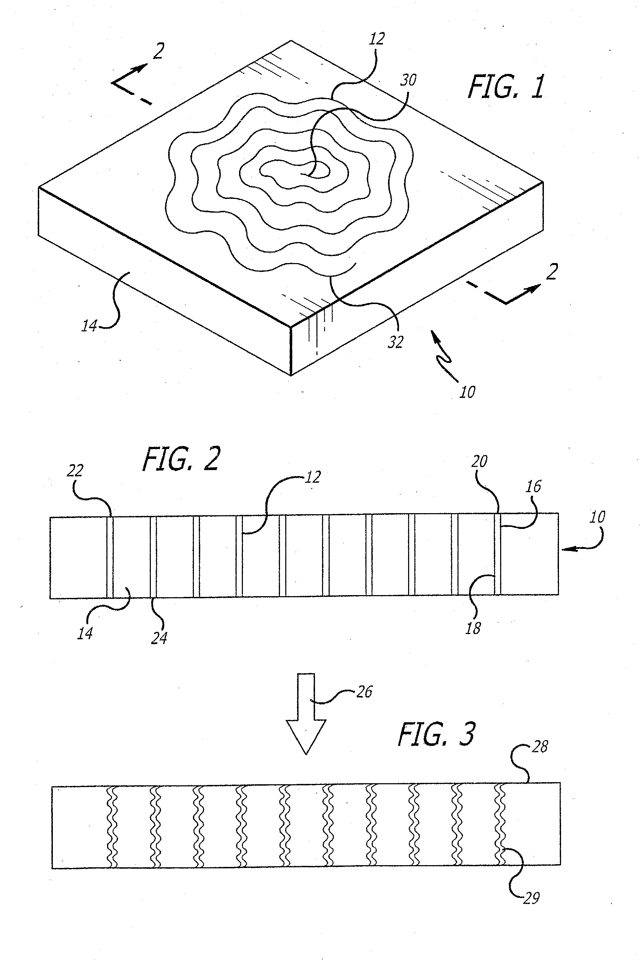

A corrugated ribbon assembly for absorbing energy from an impact in accordance with the present invention is shown generally at 10 in FIGS. 1 and 2. The assembly 10 includes a corrugated ribbon 12 that is embedded in a foam body 14. As best shown in FIG. 2, the corrugated ribbon 12 has two sides 16 and 18 that define an energy absorbing wall 20. The energy absorbing wall 20 has a first impact edge 22 and a second impact edge 24. The energy absorbing wall 20 undergoes buckling when the first or second impact edges 22 and/or 24 are impacted in a direction substantially parallel to the wall 20 as shown in FIG. 3. The impact force is represent by arrow 26 and the resulting crushed assembly is shown at 28. During crushing the walls undergo buckling to absorb energy and form buckled walls 29

The corrugated ribbon assembly 10 may be used in any situation where absorption of energy from an impact is required. The assembly 10 is particularly well suited for use in automobile headliners and other structures where protection of a vehicle occupant is needed. In addition, the assembly 10 may be used in larger scale applications for protecting large structures from impact damage. The assembly 10 may be used in any of the many situations where honeycomb and foam energy absorbers are presently being used.

As shown in FIG. 1, the corrugated ribbon 12 has a first end 30 and a second end 32. The ribbon preferably spirals outward from the first end 30 to the second end 32. Although a spiral shape for corrugated ribbon is preferred, other orientations are also suitable. For example, multiple concentric corrugated ribbon circles may be embedded in the foam body. Random or linear orientation of multiple corrugated ribbon pieces in the foam body is also possible. In addition, any number of ribbon patterns are possible provided that the orientations are such that at least a portion of the foam body is captured between the ribbon.

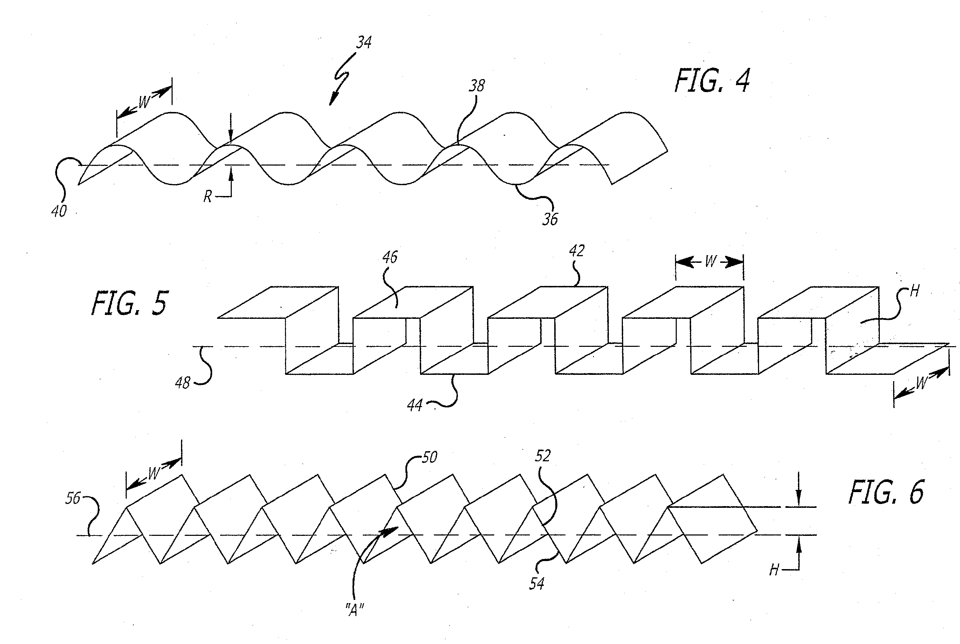

Examples of suitable corrugated ribbons are shown in FIGS.4-6. A sinusoidal type corrugated ribbon is shown at 34 in FIG. 4. The ribbon 34 includes semi-circles 36 and 38 that alternate on either side of centerline 40 (shown in phantom). Each of the semi-circles has a radius (R). Preferably, the radii of the semi-circles 36 and 38 will be between about one quarter and three quarters of the width (w) of the ribbon (see FIG. 4). The width of the ribbon is the distance between the first and second impact edges. Most preferably, the radii of the semi-circles will be equal to about one half of the width of the ribbon. Although sinusoidal corrugations that are semicircular in shape are preferred, other sinusoidal corrugations are possible.

A rectangular type corrugated ribbon is shown at 42 in FIG. 5. The ribbon 42 includes rectangles 44 and 46 that alternate on either side of centerline 48 (shown in phantom). Each rectangle has a height (H) and a width (W). Preferred rectangular corrugations are square corrugations where H and W are approximately equal. The width of the corrugated ribbon 42 is shown as (w) in FIG. 5. It is preferred that the height (H) of the rectangles be equal to between about one quarter to three quarters of width (w) of the ribbon 42. More preferably, the height of the rectangles are equal to about one half of the width (w) of the ribbon 42.

A saw tooth type corrugated ribbon is shown at 50 in FIG. 6. The saw tooth corrugated ribbon 50 includes triangular corrugations 52 and 54 that alternate on either side of centerline 56. Any number of triangular saw tooth configurations are possible where the angle (A) of the saw tooth can vary from 0 degrees to 90 degrees (see FIG. 6). The height (H) the saw tooth corrugation is also preferably equal to between about one quarter to three quarters of the width (w) of the ribbon 50. Any number of other corrugation shapes may be used provided that they impart geometric rigidity and buckling stiffness to the ribbon.

The corrugated ribbon may be made from any number of conventional materials used in honeycomb energy absorbing systems. Exemplary materials include metals, thermoplastic polymers, thermoset polymers, fiber reinforced plastics, ceramics, wood and paper. Metals such as aluminum are preferred. The thickness of the ribbon can be varied depending upon the particular type of impact and amount of energy that needs to be absorbed. An exemplary corrugated ribbon is made from 5052 aluminum alloy that is 0.004 inch thick. The ribbon has semi-circular corrugations with radii of about 0.5 inch. The width of the ribbon is about 1 inch and it is formed into a spiral and embedded in a foam body to form an energy absorbing assembly as shown in FIG. 1. Corrugated ribbons that are made from aluminum alloy that is between about 0.001 and 0.01 inch are preferred.

The foam body into which the corrugated ribbon is embedded can be any of the foam materials commonly used in impact absorbing systems. Exemplary materials include: cellulose-based foams, such as cork and balsa wood; thermosetting foams, such as polyurethane and phenolic foams; thermosetting foams, such as polypropylene, polyethylene, polystyrene, polyvinyl chloride, acrylic/methacrylic, methacrylamide, and polyetherimide/polyethersulfone foams; and microballon materials based on glass or plastic microspheres. Preferred foams include polyethylene foam, polyurethane foam and phenolic foam. The density of the foam may be varied depending upon the particular type and size of corrugated ribbon being used in the assembly. Preferably, the foam will have a density of between about 0.1 and 1 pound per cubic foot. In one example, the above-described exemplary 5052 aluminum ribbon was embedded into a phenolic foam that had a density of about 0.4 pound per cubic foot to form a bumper which was shaped as shown in FIG. 1. The ribbon was 28 inches long and was formed into a spiral that was embedded into the phenolic foam to form a bumper that was 141 cm long, 13 cm wide and 4.5 cm thick. The mass of the bumper was 2782 grams. The bumper was subjected to crushing tests in which the maximum load was 1326 lb and the total energy of the load was 775 lb-in. The bumper was found to have energy absorption efficiencies on the order of 80 percent, i.e., the bumper was able to absorb 80 percent of the total possible energy of load when crushed.

The particular foam type and density which is used may be varied widely provided that the foam has a sufficiently low crush strength as to not substantially alter the energy absorbing characteristics of the corrugated ribbon. However, the foam must be sufficiently strong to provide stabilization of the ribbon as it undergoes bucking during an impact. The particular foam which is best suited for use with a particular corrugated ribbon size, shape and material may be determined in each individual case by routine experimentation.

It is preferred that the corrugated ribbon be initially shaped into a spiral or other configuration and then embedded in the foam body. Accordingly, the foam and ribbon should be matched so that the ribbon can be pressed into the foam body. However, in certain situations it may be desirable to inject or otherwise add the foam to the corrugated ribbon configuration.

Having thus described exemplary embodiments of the present invention, it should be noted by those skilled in the art that the within disclosures are exemplary only and that various other alternatives, adaptations and modifications may be made within the scope of the present invention. For example, complex energy absorbing structures are possible where the width of the corrugated ribbon and foam body may be varied. Also, the foam body may be molded into a wide variety of non-planar shapes to receive a multitude of different corrugated ribbon configurations. Accordingly, the present invention is not limited to the above preferred embodiments and examples, but is only limited by the following claims.

## Claims

1. A corrugated ribbon assembly for absorbing energy from an impact, said assembly comprising:
a corrugated ribbon comprising two sides which define an energy absorbing wall that extends between a first impact edge of said corrugated ribbon and a second impact edge of said corrugated ribbon, said energy absorbing wall being capable of undergoing buckling to absorb energy when said first or second impact edge is impacted in a direction substantially parallel to said wall; and a foam body in which said corrugated ribbon is embedded, said foam body providing structural support of said corrugated ribbon during buckling thereof.

2. A corrugated ribbon assembly for absorbing energy according to claim 1, wherein said corrugated ribbon comprises a corrugation selected from the group consisting of sinusoidal, rectangular, saw tooth.

3. A corrugated ribbon assembly for absorbing energy according to claim 1, wherein said corrugation is a sinusoidal corrugation that comprises alternating semi-circles wherein each of said semi-circles has a radius.

4. A corrugated ribbon assembly for absorbing energy according to claim 3, wherein the radii of said semi-circles are equal to between about one quarter and three quarters of the distance between the first and second impact edges of said corrugated ribbon.

5. A corrugated ribbon assembly for absorbing energy according to claim 4, wherein the radii of said semi-circles are equal to about one half the distance between the first and second impact edges of said corrugated ribbon.

6. A corrugated ribbon assembly for absorbing energy according to claim 2, wherein said corrugation is a rectangular corrugation that comprises alternating rectangles wherein each of said rectangles has a height and a width.

7. A corrugated ribbon assembly for absorbing energy according to claim 6, wherein the height and width of said rectangular corrugations is substantially equal.

8. A corrugated ribbon assembly for absorbing energy according to claim 6, wherein the height of said rectangles are equal to between about one quarter and three quarters of the distance between the first and second impact edges of said corrugated ribbon.

9. A corrugated ribbon assembly for absorbing energy according to claim 8, wherein the height of said rectangles are equal to about one half the distance between the first and second impact edges of said corrugated ribbon.

10. A corrugated ribbon assembly for absorbing energy according to any of claims 1, 2 or 3, wherein said corrugated ribbon comprises a first end and a second end, said corrugated ribbon extending in a spiral outward from said first end to said second end.

11. A corrugated ribbon assembly for absorbing energy according to claim 1, wherein said corrugated ribbon is made from a material selected from the group consisting of metals, thermoplastic polymers, thermoset polymers, fiber reinforced plastics, ceramics, wood and paper.

12. A corrugated ribbon assembly for absorbing energy according to claim 11, wherein said metal is aluminum.

13. A corrugated ribbon assembly for absorbing energy according to claim 12, wherein said energy absorbing wall is between 0.001 and 0.010 inch thick.

14. A corrugated ribbon assembly for absorbing energy according to claim 1, wherein said foam body comprises a foam having a density of between about 0.1 and 1 pounds per cubic foot.

15. A corrugated ribbon assembly for absorbing energy according to claim 1, wherein said foam is selected from the group consisting of polypropylene foam, polyurethane foam, and phenolic foam.

16. A method absorbing energy from an impact, said method comprising the steps of:
a) providing a corrugated ribbon assembly, said assembly comprising:
1) a corrugated ribbon comprising two sides which define an energy absorbing wall that extends between a first impact edge of said corrugated ribbon and a second impact edge of said corrugated ribbon, said energy absorbing wall being capable of undergoing buckling to absorb energy when said first or second impact edge is impacted in a direction substantially parallel to said wall; and
2) a foam body in which said corrugated ribbon is embedded, said foam body providing structural support of said corrugated ribbon during buckling thereof; and
b) impacting said corrugated ribbon assembly with an object in a direction substantially parallel to said wall to cause buckling of said wall.

17. A method for absorbing energy according to claim 16, wherein said corrugated ribbon comprises a corrugation selected from the group consisting of sinusoidal, rectangular, saw tooth.

18. A method for absorbing energy according to claim 16, wherein said corrugation is a sinusoidal corrugation that comprises alternating semi-circles wherein each of said semi-circles has a radius.

19. A method for absorbing energy according to claim 18, wherein the radii of said semi-circles are equal to between about one quarter and three quarters of the distance between the first and second impact edges of said corrugated ribbon.

20. A method for absorbing energy according to claim 19, wherein the radii of said semi-circles are equal to about one half the distance between the first and second impact edges of said corrugated ribbon.

21. A method for absorbing energy according to claim 17, wherein said corrugation is a rectangular corrugation that comprises alternating rectangles wherein each of said rectangles has a height and a width.

22. A method for absorbing energy according to claim 21, wherein the height and width of said rectangular corrugations is substantially equal.

23. A method for absorbing energy according to claim 21, wherein the height of said rectangles are equal to between about one quarter and three quarters of the distance between the first and second impact edges of said corrugated ribbon.

24. A method for absorbing energy according to claim 23, wherein the height of said rectangles are equal to about one half the distance between the first and second impact edges of said corrugated ribbon.

25. A method for absorbing energy according to any of claims 16, 17 or 18, wherein said corrugated ribbon comprises a first end and a second end, said corrugated ribbon extending in a spiral outward from said first end to said second end.

26. A method for absorbing energy according to claim 16, wherein said corrugated ribbon is made from a material selected from the group consisting of metals, thermoplastic polymers, thermoset polymers, fiber reinforced plastics, ceramics, wood and paper.

27. A method for absorbing energy according to claim 26, wherein said metal is aluminum.

28. A method for absorbing energy according to claim 27, wherein said energy absorbing wall is between 0.001 and 0.010 inch thick.

29. A method for absorbing energy according to claim 16, wherein said foam body comprises a foam having a density of between about 0.1 and 1 pounds per cubic foot.

30. A method for absorbing energy according to claim 16, wherein said foam is selected from the group consisting of polypropylene foam, polyurethane foam, and phenolic foam.
